# EUROPÄISCHE PATENTANMELDUNG

(11) **EP 0 790 181 A1**
(43) Veröffentlichungstag der Anmeldung: **20.08.1997**
(21) Anmeldenummer: 97102405.4
(22) Anmeldetag: 13.02.1997
(51) Int. Cl.: B64C 27/22, B64C 27/32, B64C 27/02

(54) **Drehflügel-Luftfahrzeug**

(30) Priorität: 14.02.1996 DE 29602559 U
(71) Anmelder: Kähler, Kai, 20355 Hamburg (DE)
(72) Erfinder: Kähler, Kai, 20355 Hamburg (DE)
(74) Vertreter: Patentanwälte Hauck, Graalfs, Wehnert, Döring, Siemons

(57) **Zusammenfassung**

Erfindungsgemäß sind die Blätter des Hauptrotors (8) in Längsrichtung insbesondere an den Enden leicht nach unten gekrümmt und bündig in der Weise angeordnet, daß sie bei einem einstellbaren Anstellwinkel von 0° in ihrer Gesamtheit eine kreisförmige Fläche formen. Während ein Paar Stabilisationsrotoren (14,16) zusätzlich zum Ausgleich des Drehmoments des Hauptrotors (8) Vortrieb für das Fahrzeug erzeugen, bilden die so geformten Hauptrotorblätter einen Frisbee-förmigen Auftriebskörper. Zusätzlich kann erfindungsgemäß ein stationärer Motor in einem entsprechenden Fahrzeug die für den Flug nötige Rotationsenergie speichern. Außerdem kann ein entsprechendes Fahrzeug erfindungsgemäß dadurch gelenkt werden, daß die Zelle (4) insgesamt senkrecht relativ zur Hauptrotorachse in alle Richtungen verschiebbar ist.

## Beschreibung

Die Erfindung bezieht sich auf ein Drehflügelluftfahrzeug nach dem Oberbegriff des Anspruchs 1.

Zum Ausgleich des vom Hauptrotor erzeugten Drehmoments um die Hochachse weisen bekannte Drehflügelluftfahrzeuge, insbesondere Hubschrauber, Stabilisationsrotoren auf, insbesondere einen, der am Heck des Luftfahrzeugs so angebracht ist, daß seine Drehebene parallel zur Längsachse des Luftfahrzeugs ist.

Diese Hubschrauber haben den Nachteil, daß sie zur Erzeugung des Vortriebs entweder - zum Beispiel durch entsprechende Neigung des Luftfahrzeugs in Flugrichtung (Kopfkippsteuerung) - einen Teil der durch den Drehflügelrotor erzeugten Auftriebsenergie in Vortriebsenergie umlenken oder aber mindestens ein zusätzliches Vortriebsaggregat benötigen, in der Regel ein oder zwei Turbinentriebwerke. Dies ist sehr aufwendig und zudem energiezehrend.

Propellerflugzeuge herkömmlicher Art vermögen anströmende Luft nur begrenzt zu nutzen. Sie können zum Beispiel durch Verstellen der Propellerblätter einen Bremseffekt erreichen oder aufgrund eines Antriebs der Propellerblätter durch anströmende Luft (Autorotation) einen ausgefallenen Motor wieder starten.

Hubschrauber herkömmlicher Art werden um ihre Längs- und Querachse im wesentlichen dadurch gesteuert bzw. manövriert, daß die Rotorblätter des Hauptrotors über eine Taumelscheibe ungleichmäßig verstellt werden und dadurch eine Neigung des Luftfahrzeugs um die Längs- oder Querachse bewirkt wird. Die mit der auftriebserhöhenden Verstellung der Rotorblätter stets einhergehende Zunahme an Luftwiderstand kann nur durch erhöhten Energieverbrauch ausgeglichen werden.

Ferner wenden bekannte Hubschrauber in der Start- und Landephase am meisten Energie auf. Dies ist darauf zurückzuführen, daß in diesen Phasen eine auftriebsfördernde Wirkung anströmender Luft, abgesehen von der Wirkung von Wind, nicht vorhanden ist.

Der Erfindung liegt daher die Aufgabe zugrunde, den Energiebedarf von Drehflügelluftfahrzeugen bei der Vorwärtsbewegung, der Steuerung des Luftfahrzeugs und beim Starten und Landen zu verringern.

Nach der Erfindung wird die Aufgabe durch ein gattungsgemäßes Luftfahrzeug gelöst, dessen Blätter des Hauptrotors in Längsrichtung insbesondere an ihren Enden leicht nach unten gekrümmt ausgestaltet und bündig in der Weise angeordnet sind, daß sie bei einem Anstellwinkel von 0° in ihrer Gesamtheit eine kreisförmige Fläche bilden, so daß in Draufsicht diese von den Blättern aufgespannte kreisförmige Fläche insgesamt konvex geformt ist. Während sich in der Startphase, also bei angewinkelten Blättern, im Vergleich zu einem Hubschrauber, bei dieser Rotorblattform kaum Unterschiede zeigen, ist im Vorwärtsflug bei neutral gestellten, also weder Auf- noch Abtrieb erzeugenden Blättern insgesamt eine Auftrieb erzeugende Tragfläche, vergleichbar etwa einem "Frisbee", gegeben. Dadurch kann die bislang auf die Drehung des Hauptrotors und damit auf den Auftrieb gerichtete Antriebsenergie statt dessen fast vollständig für den Vortrieb genutzt werden. Der Vortrieb wird durch mindestens zwei symmetrisch zur Hauptrotorachse angeordnete, antriebsmäßig mit dem Hauptrotor gekoppelte Stabilisationsrotoren erzeugt, deren Drehebene senkrecht zur Längsachse des Luftfahrzeugs ist und deren Rotorblätter, vorzugsweise auch zur Erzeugung eines Rücktriebs, im Anstellwinkel verstellbar sind.

Wenn das Luftfahrzeug ausschließlich eine Vertikalbewegung ausführen soll, werden die Stabilisationsrotoren so eingestellt, daß sie insgesamt keinen Vortrieb in Richtung der Längsachse des Luftfahrzeugs erzeugen. Dies kann bei zwei Stabilisationsrotoren so realisiert werden, daß ein Rotor einen Vortrieb erzeugt und der andere Rotor einen Rücktrieb. Dieses Drehmoment wird zur Kompensation des vom Hauptrotor erzeugten Drehmoments benutzt.

Damit das Luftfahrzeug eine Vorwärtsbewegung ausführt, können beide Stabilisationsrotoren durch Veränderung ihrer Anstellwinkel so eingestellt werden, daß sie einen Vortrieb erzeugen. Während dann die Differenz der beiden Vortriebskräfte für den Ausgleich des Hauptrotordrehmoments sorgt, wird gleichzeitig in Längsrichtung des Luftfahrzeugs ein Vortrieb erzeugt.

Vorzugsweise sind die Stabilisationsrotoren mit dem Hauptrotor über ein Getriebe gekoppelt. Auf diese Weise kann erreicht werden, daß, wenn die Geschwindigkeit des Luftfahrzeugs verringert werden soll, gegen die Stabilisationsrotoren anströmende Luft auf diese ein Drehmoment ausübt, das über die Getriebeverbindung auf den Hauptrotor übertragen wird. Dadurch kann eine weitere Energieeinsparung erreicht werden, insbesondere weil so die für eine Landung erforderliche Drehzahl des Hauptrotors vollständig unter Ausnutzung der anströmenden Luft erreicht werden kann. Die anströmende Luft wird dann besonders gut ausgenutzt, wenn die Blätter der Stabilisationsrotoren bündig in der Weise angeordnet sind, daß sie bei einem Anstellwinkel von 0° in ihrer Gesamtheit jeweils eine kreisförmige Fläche bilden.

Bei einem solchen Luftfahrzeug kann vor einem Flug mittels eines externen Motors, der über ein Getriebe mit dem Hauptrotor verbunden ist, Rotationsenergie in diesem gespeichert werden, wobei ggf. zur Erhöhung des Trägheitsmoments das Gewicht der Rotorblätter an ihren Enden heraufgesetzt werden kann.

Dieses erfindungsgemäße Luftfahrzeug benötigt im Normalfall keinen eigenen Antriebsmotor. Es ist deshalb baulich einfach und in Anschaffung und Betrieb wirtschaftlich, betriebssicher und umweltfreundlich. Insbesondere ist die Geräuschentwicklung minimal. Eine Belästigung durch Abgase tritt nicht auf.

Weiterhin wird nach der Erfindung die Aufgabe, insbesondere einen wesentlichen Teil der Steuermanöver mit einem geringen Energieaufwand durchzuführen, durch ein gattungsgemäßes Luftfahrzeug gelöst, bei dem die Zelle senkrecht relativ zu Hauptrotorachse insgesamt in alle Richtungen, vorzugsweise durch hydraulische oder elektrische Betätigung, verschiebbar ist. Auf diese Weise kann das von dem Hauptrotor getragene Gewicht der Zelle oder der Zellen, insbesondere von Fahrgast-, Manövrier- und ggf. Antriebszellen, verschoben werden. Das Luftfahrzeug neigt sich bei einer Verschiebung aus der Normalposition von Hauptrotor bzw. der oder den Zellen um die Längs- bzw. Querachse und zwar - entsprechend der Präzision eines Kreisels - in der Hauptrotorebene rechtwinklig versetzt relativ zu der Richtung, in die die Zelle verschoben wird.

Nachfolgend wird die Erfindung anhand von Zeichnungen naher erläutert.
- Fig. 1: ist eine schematische Frontansicht eines erfindungsgemäßen Luftfahrzeugs.
- Fig. 2: ist eine schematische Draufsicht eines erfindungsgemäßen Luftfahrzeugs.
- Fig. 3: ist eine schematische Seitenansicht eines erfindungsgemäßen Luftfahrzeugs.

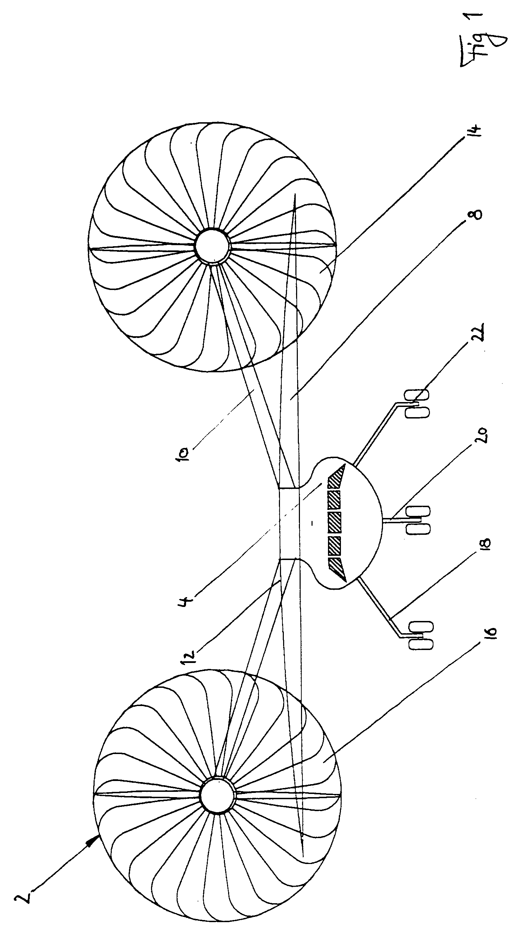

Fig. 1 zeigt ein Drehflügelluftfahrzeug 2 gemäß dieser Erfindung. Das Luftfahrzeug weist eine Zelle 4 auf, die zum Manövrieren und zur Beförderung von Nutzlast dient. Auf der Zelle 4 ist ein Hauptrotor 8 angeordnet, dessen Drehebene horizontal ist. An der Zelle 4 sind zwei Tragflächen 10 und 12 befestigt, die an ihren äußeren Enden jeweils einen Stabilisationsrotor 14 und 16 aufweisen. Die Drehebenen der Stabilisationsrotoren 14 und 16 sind senkrecht zu der Längsachse des Luftfahrzeugs. An der Zelle 4 sind drei Standbeine 18, 20 und 22 befestigt.

Die Anstellwinkel der Blätter des Hauptrotors 8 und der Stabilisationsrotoren 14, 16 sind verstellbar. Die Stabilisationsrotoren sind mit dem Hauptrotor 8 über ein Getriebe (nicht gezeigt) gekoppelt.

Ferner kann vorgesehen sein, daß die Zelle 4 senkrecht relativ zur Hauptrotorachse insgesamt in alle Richtungen verschoben werden kann, wobei vorzugsweise eine hydraulische oder elektrische Betätigung vorgesehen ist.

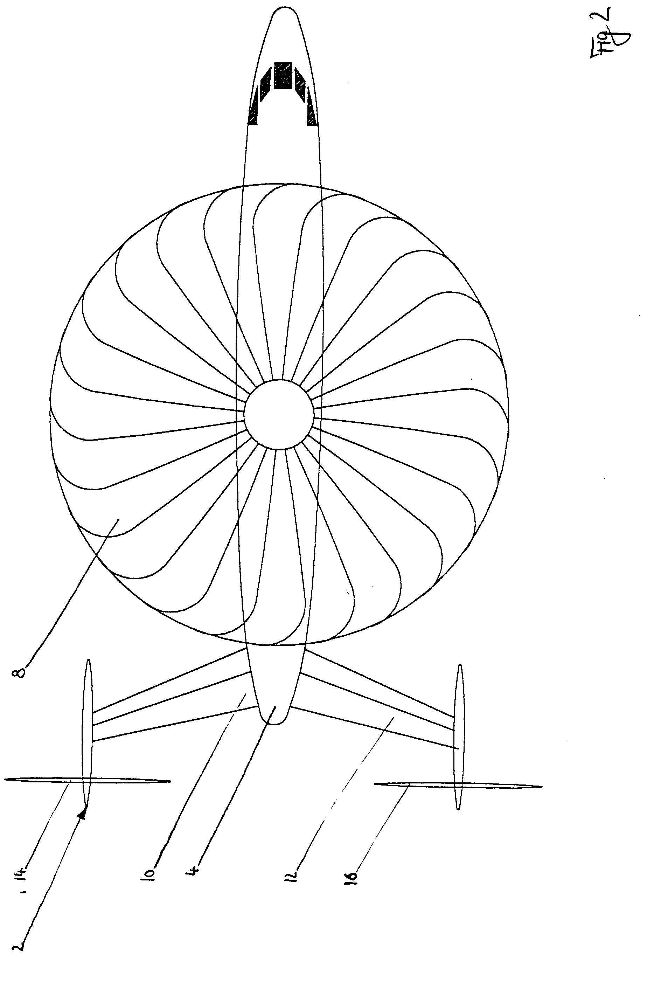

In Fig. 2 ist das Luftfahrzeug der Fig. 1 in Draufsicht gezeigt, wobei die Blätter des Hauptrotors mit einem Anstellwinkel von 0° zusammen die Form einer Frisbeescheibe bilden. Die Blätter des Hauptrotors sind an ihren Enden 26 sichelförmig gekrümmt, wodurch für andere Anstellwinkel eine strömungsgünstigere Form gegeben ist. Die Form einer Frisbee-Scheibe ergibt sich dadurch, daß die Blätter des Hauptrotors bei einem Anstellwinkel von 0° bündig in der Weise angeordnet sind, daß sie in ihrer Gesamtheit eine kreisförmige Fläche bilden und in Längsrichtung insbesondere an den Enden leicht nach unten gekrümmt sind.

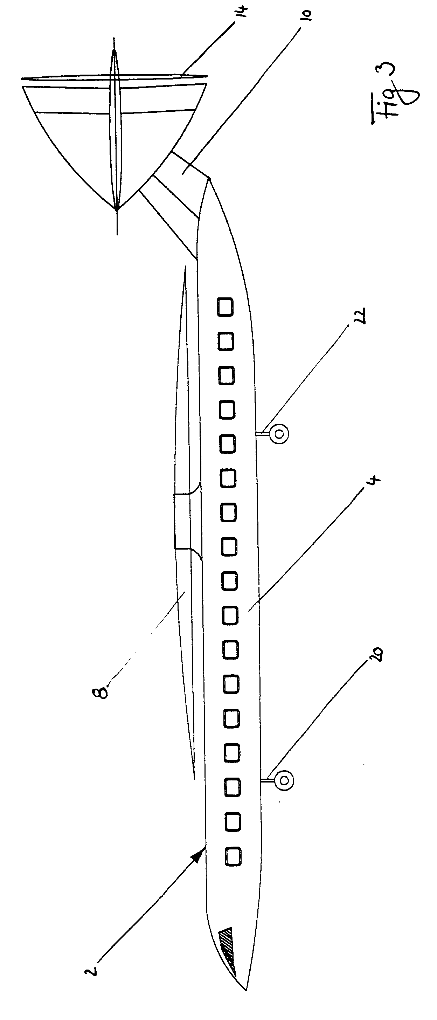

In Fig. 3 ist am dort in Seitenansicht gezeigten Luftfahrzeug 2 ebenso wie in Fig. 1 die Auftrieb erzeugende, nach oben gewölbte Querschnittform des Hauptrotors in Form einer Frisbee-Scheibe bei einem Anstellwinkel von 0° erkennbar.

Die erfindungsgemäßen Luftfahrzeuge werden folgendermaßen betrieben. Vor dem Start werden sie aus einer externen Energiequelle über einen stationären Motor mit Rotationsenergie, die der Hauptrotor aufnimmt, aufgeladen. Dabei ist es ohne weiteres möglich, zumindest die für Kurzstreckenluftverkehr (Shuttle-Dienst) erforderlichen Antriebsenergien in konstruktiv und betrieblich sicherer Weise in einem Rotor mäßiger Abmessungen bei beherrschbaren Trägheitsmomenten und Drehzahlen zu speichern. Ein besonderer Vorteil besteht darin, daß die Energiequelle nur eine verhältnismäßig geringe Leistungsfähigkeit zu haben braucht und auch nur zeitweise impulsweise arbeiten kann, da die Energie nicht sofort verwendet wird, sondern zunächst gespeichert wird.

Zum Start wird das Luftfahrzeug von der externen Energiequelle getrennt und der Anstellwinkel der Hauptrotorblätter so verändert, daß ein Auftrieb erzeugt wird. Das Luftfahrzeug steigt dann je nach dem gewählten Anstellwinkel mehr oder weniger schnell auf. Aufgrund der Kreiselwirkung des Hauptrotors sucht dabei die Hauptrotorachse, um die herum die Zellen angeordnet sind, ihre Richtung im Raum beizubehalten. Ein Manövrieren ist um die Quer- und Längsachse durch einzelnes Verstellen der Anstellwinkel der Rotorblätter und/oder durch Gewichtsverlagerungen aufgrund eines Verschiebens der Zellen relativ zu der Hauptrotorachse möglich. Ein Manövrieren um die Hochachse ist durch ein Verstellen der Anstellwinkel der Blätter eines der beiden Stabilisationsrotoren möglich, so daß die Stabilisationsrotoren zusammen ein Drehmoment erzeugen, das entweder größer oder kleiner als das von dem Hauptrotor erzeugte Drehmoment ist.

Spätestens nach Erreichen der gewünschten Flughöhe werden die Blätter der Stabilisationsrotoren in der oben beschriebenen Weise so verstellt, daß ein Vortrieb erreicht wird. Der Hauptrotor wirkt jetzt bei 0° Anstellwinkel der Rotorblätter wie eine Tragfläche, so daß zusätzliche Auftriebsenergie nicht benötigt wird bzw. generiert werden muß. Energie muß nun hauptsächlich nur noch für die Vortrieb erzeugenden Stabilisationsrotoren verwendet werden.

Bei Annäherung an das gewünschte Flugziel, spätestens nach so weitgehender Aufzehrung der Rotationsenergie des Hauptrotors, daß ein Vortrieb nicht mehr erzielt werden kann, wird der Sinkflug eingeleitet. Dazu werden zunächst die Blätter der Stabilisationsrotoren so eingestellt, daß die anströmende Luft deren Drehzahl wieder erhöht (Autorotation), und damit zugleich die des Hauptrotors aufgrund der Getriebeverbindung zwischen den Stabilisationsrotoren und dem Hauptrotor. In dem dann folgenden Landeanflug wird die Blattstellung der Stabilisationsrotoren so verändert, daß sie nur noch eine Stabilisierungsfunktion im Sinne der Beibehaltung der gewünschten Position um die Hochachse gewährleistet. Zugleich werden die Blätter des Hauptrotors so eingestellt, daß die nunmehr von unten anströmende Luft deren Drehzahl weiter erhöht (Autorotation).

Der gleiche Vorgang ergibt sich triebwerksunterstützt bei einer Ausführungsform des erfindungsgemäßen Luftfahrzeugs, bei der dieses ein von einer internen Energiequelle gespeistes Triebwerk aufweist.

## Patentansprüche

1. Drehflügelluftfahrzeug zur Beförderung von Nutzlast, insbesondere Personen, mit mindestens einer zur Aufnahme der Nutzlast eingerichteten Zelle, mindestens einem an dieser angebrachten Hauptrotor mit Rotorblättern, deren Anstellwinkel zur Auftriebserzeugung verstellbar ist, einer von der Zelle aus betätigbaren Manövriereinrichtung und Stabilisierungsmitteln, die dem Drehmoment des Rotors entgegenwirken, zwei symmetrisch zur Hauptrotorachse angeordneten, antriebsmäßig mit dem Hauptrotor gekoppelten Stabilisationsrotoren, deren Drehebene senkrecht zur Längsachse des Luftfahrzeugs ist und deren Rotorblätter, vorzugsweise auch zur Erzeugung eines Rücktriebs, im Anstellwinkel verstellbar sind, dadurch gekennzeichnet, daß die Blätter des Hauptrotors in Längsrichtung insbesondere an den Enden leicht nach unten gekrümmt sind, und daß die Blätter des Hauptrotors bündig in der Weise angeordnet sind, daß sie bei einem Anstellwinkel von 0° in ihrer Gesamtheit eine kreisförmige Fläche bilden.

2. Luftfahrzeug nach Anspruch 1, dadurch gekennzeichnet, daß die Stabilisationsrotoren mit dem Hauptrotor über ein Getriebe gekoppelt sind.

3. Luftfahrzeug nach Anspruch 1 oder 2, dadurch gekennzeichnet, daß die Blätter der Stabilisationsrotoren bündig in der Weise angeordnet sind, daß sie bei einem Anstellwinkel von 0° in ihrer Gesamtheit eine kreisförmige Fläche bilden.

4. Drehflügelluftfahrzeug zur Beförderung von Nutzlast, insbesondere Personen, mit mindestens einer zur Aufnahme der Nutzlast eingerichteten Zelle, einem an dieser angebrachten Hauptrotor mit Rotorblättern, deren Anstellwinkel zur Auftriebserzeugung verstellbar ist, einer von der Zelle aus betätigbaren Manövriereinrichtung und Stabilisierungsmitteln, die dem Drehmoment des Rotors entgegenwirken, dadurch gekennzeichnet, daß in ihm mittels eines stationären Motors, der über ein Getriebe mit dem Hauptrotor verbunden ist, Rotationsenergie gespeichert werden kann.

5. Drehflügelluftfahrzeug zur Beförderung von Nutzlast, insbesondere Personen, mit mindestens einer zur Aufnahme der Nutzlast eingerichteten Zelle, einem an dieser angebrachten Hauptrotor mit Rotorblättern, deren Anstellwinkel zur Auftriebserzeugung verstellbar ist, einer von der Zelle aus betätigbaren Manövriereinrichtung und Stabilisierungsmitteln, die dem Drehmoment des Rotors entgegenwirken, dadurch gekennzeichnet, daß die Zelle senkrecht relativ zur Hauptrotorachse insgesamt in alle Richtungen, vorzugsweise durch hydraulische oder elektrische Betätigung, verschiebbar ist.
